# EUROPÄISCHE PATENTANMELDUNG

(11) **EP 0 533 122 A1**
(43) Veröffentlichungstag der Anmeldung: **24.03.1993**
(21) Anmeldenummer: 92115809.3
(22) Anmeldetag: 16.09.1992
(51) Int. Cl.: E06B 3/96, B60J 1/00, B60P 3/32

(54) **Rahmenkonstruktion**

(30) Priorität: 18.09.1991 DE 4131024
(71) Anmelder: Weiss, Albert, D-74747 Ravenstein (DE)
(72) Erfinder: Weiss, Albert, D-74747 Ravenstein (DE)
(74) Vertreter: Canzler, Rolf, Dipl.-Ing.

(57) **Zusammenfassung**

Bei einer Rahmenkonstruktion für Türen, Fenster und dergleichen für Fahrzeuge besteht der Rahmen aus einem biegbaren, einstückigen Metallprofil, das einen Hohlraum begrenzt und in den Eckbereichen auf der Profilinnenseite keilförmige Ausschnitte (13) und auf der Profilaußenseite einen umlaufenden Materialrand (12) aufweist, über den das Profil gebogen ist. Auf der offenen Seite ist das Metallprofil durch eine Abdeckung (3) verschlossen, wbei im Bereich der Rahmenecken der Hohlraum mit Vergußmasse ausgegossen ist. Die Herstellung des Rahmens erfolgt durch Zuschnitt des Profiles entsprechend der Länge des Rahmenumfanges, durch keilförmige Einschnitte (13) in den Eckbereichen bis auf einen Materialrand (12), durch anschließendes Biegen des Profiles über diesen Materialrand und Eingrenzen der Eckbereiche und der Stoßstelle (14). Die eingegrenzten Bereiche werden mit Vergußmasse ausgegossen.

## Beschreibung

Die Erfindung betrifft einen aus einem kanalförmigen Profil bestehenden Rahmen für Türen, Fenster und dergleichen, insbesondere für Fahrzeuge gemäß dem Oberbegriff des Anspruch 1.

Wohnwagen, Mobil-Homes und ähnliche Unterkünfte sowie auch Fahrzeuge werden aus Gewichtsersparnis in leichter, dünnwandiger Bauweise erstellt. Dennoch wird für alle Bauelemente große Stabilität verlangt und müssen sie für große Temperaturunterschiede zwischen Innen- und Außenwänden geeignet sein, da diese Unterkünfte auch im Winter benutzt werden. Rahmen für Türen und Fenster, Halterungen und andere Bauteile werden deshalb unter Verwendung von Aluminium und Kunststoffen hergestellt.

Es ist bekannt, bei der Verwendung von Aluminium-Profilen eine thermische Trennung zwischen Außen und Innen dadurch herbeizuführen, daß das Außenprofil mit Kunststoff hinterlegt und ausgefüllt ist, was jedoch den Nachteil höheren Gewichtes hat. Die Profile werden unter Verwendung von Eckteilen oder auch auf Gehrung geschnitten zusammengeschweißt oder auch verklebt. Diese Bauweise ist aufwendig. Außerdem können an diesen Stellen, bedingt durch die labile Fahrzeugkonstruktion (Sandwich-Aufbau) und die permanente mechanische Belastung, Risse und damit Undichtigkeiten auftreten.

Zur Lösung der Probleme bei der Eckverbindung ist auch schon bekannt, Aluminiumprofile an den Ecken zu biegen. Da die Profile für die gewünschte thermische Trennung konstruktiv eine große Breite und Tiefe verlangen, können nur relativ große Radien gefertigt werden, was wiederum optisch nicht den Vorstellungen der Designer entspricht.

Die US-PS 2.219.594 offenbart ein Verfahren zur Herstellung eines Rahmens für Gebäudetüren oder -fenster, bei welchem ein kanalförmiges Profil entsprechend der Länge des Umfanges des Rahmens zugeschnitten und in den Eckbereichen auf der Profil-Innenseite keilförmig bis auf eine auf der Rahmenaußenseite umlaufende Wandung ausgeschnitten und dann das Profil über diese umlaufende Wandung zu dem gewünschten Rahmen gebogen wird. Für die Sicherung des gebogenen Rahmens wird vorgeschlagen, die Gebäudewand entsprechend zu präparieren und den Rahmen einzuputzen. Der Rahmen wird dadurch erst beim Einbau fixiert. Das Problem der äußeren Eckengestaltung ist dadurch zwar gelöst. Diese Art der Rahmenkonstruktion und ihre Herstellung ist jedoch für Rahmen der eingangs genannten Art nicht verwendbar.

Aufgabe der Erfindung ist es, die vorstehenden Nachteile zu vermeiden und eine Rahmenkonstruktion zu schaffen, die den hohen Anforderungen bei fahrbaren Unterkünften in mechanischer und thermischer Hinsicht entspricht und sich dennoch auch in kleineren Serien wirtschaftlich herstellen läßt. Diese Aufgabe wird erfindungsgemäß durch die Merkmale des Anspruchs 1 sowie auch durch Anspruch 23 gelöst.

Die erfindungsgemäße Rahmenkonstruktion erlaubt nicht nur eine einfache und damit ökonomische Herstellung eines Rahmens aus beliebigen Stangenprofilen, sondern sie ist durch die mit Vergußmasse verstärkten Ecken stabil und weist durch den geschlossenen Luftraum eine gute thermische Trennung auf. Durch das Einsetzen von Trennwänden wird auf einfache Weise die eingebrachte Vergußmasse exakt nur auf die gewünschten Bereiche beschränkt und unnötiges Material und Gewicht vermieden.

Die Trennwände sind unterteilt und können so auch bei komplizierten Profilformen eingebracht werden. Besonders einfach ist das Einbringen, wenn die beiden Teile der Trennwand durch ein Scharnier miteinander verbunden sind. Zum Ausgleich von Toleranzen ist eine Dichtung am äußeren Umfang der Trennwand vorgesehen, sodaß eine dichtende Anlage am Metallprofil gewährleistet ist. Dehnungstoleranzen werden durch eine längsbewegliche Befestigung der Abdeckungen kompensiert. Die Anordnung einer Überlaufsicherung in den für das Ausgießen mit Vergußmasse abgegrenzten Bereichen gewährleistet ein exaktes Befüllen mit Vergußmasse. Eine solche Sicherung läßt sich auf einfache und wirkungsvolle Weise durch einen siphonartig gestalteten Überlauf in der Trennwand erreichen.

Durch das Ausgießen der Eckbereiche und auch der Stoßstellen lassen sich auf einfache Weise sehr stabile und leichte Rahmen herstellen mit guten thermischen Eigenschaften.

Die Erfindung wird im einzelnen anhand der der Figuren beschrieben. Es zeigen
- Fig.1: eine schematische Gesamtansicht des Rahmens

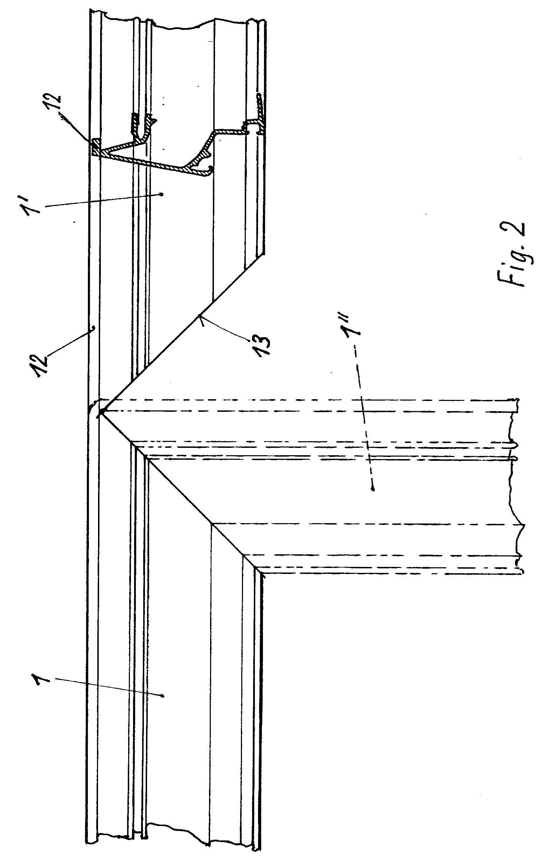

- Fig.2: die Gestaltung des Eckbereiches des Rahmens nach Fi.1

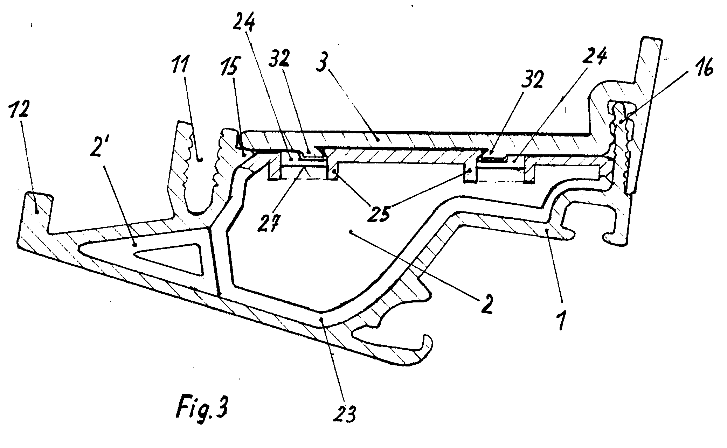

- Fig.3: das Rahmenprofil mit eingebauter Trennrippe und Abdeckprofil im Schnitt
- Fig.4: eine Trennwand in der Seitensicht
- Fig.5: die Trennwand gemäß Fig.4 in der Draufsicht
- Fig.6 und 7: einen Schnitt A-A durch die Trennwand gemäß Fig.4 mit verschiedener Ausführung der Dichtung
- Fig.8: das Verbund-Profil eines aus Außen- und Innenteil bestehenden Rahmens

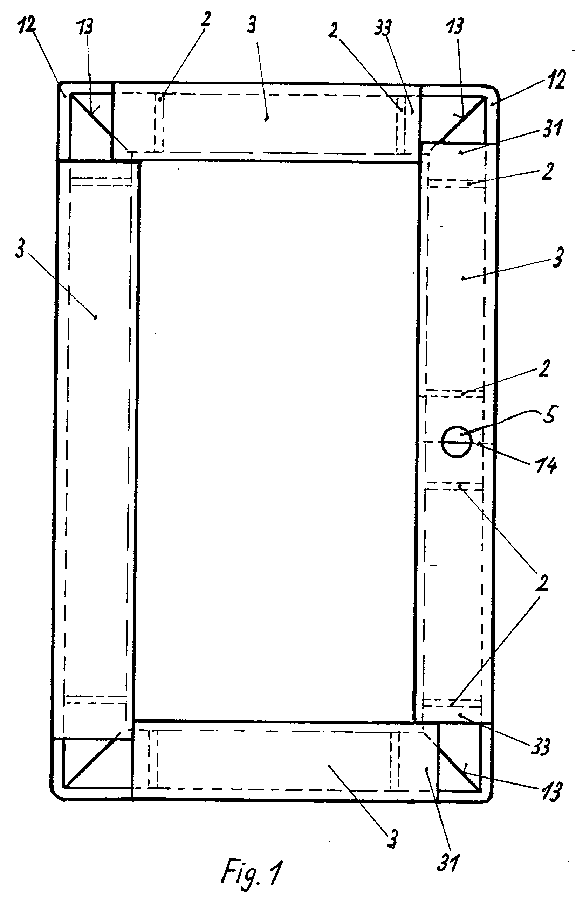

Der in Fig.1 dargestellte Rahmen dient als Außenrahmen für ein Wohnwagenfenster. Derartige Rahmen lassen sich mit Vorteil auch bei anderen Fahrzeugen wie z.B. Mobil-Homes, Wohnmobilen etc. einsetzen. Der Rahmen ist aus einem biegbaren, einstückigen Profil 1 hergestellt, das vorzugsweise aus Aluminium besteht und auf die Länge des Rahmenumfanges geschnitten ist. An den Eckpunkten werden auf der Profilinnenseite Materialkeile in Form einer Gehrung 13 herausgeschnitten, wobei ein Materialrand 12 stehen bleibt, über den die Ecken des Rahmens gebogen werden, bis die Profilkanten der Gehrung 13 und am Profilende fest aneinander liegen. Vorzugsweise liegt die Stoßstelle 14 der Profilenden in der Mitte der Rahmenunterseite. Dieser Materialrand ist in der Biegeebene schmal gegenüber der gesamten Profilbreite, sodaß sich sehr kleine Eckradien erzeugen lassen. Somit ergibt sich ein geschlossen umlaufender Rahmen ohne Unterbrechungen im Eckbereich auch bei kleinen Radien.

Die offene Rückseite des kanalartigen Profiles 1 wird mit einer Abdeckung 3 verschlossen, sodaß eine geschlossene Luftkammer entsteht. Diese Luftkammer dient als Isolation zwischen Außentemperatur und Innentemperatur beziehungsweise Wandtemperatur. Zweckmäßigerweise ist die Abdeckung 3 deshalb aus Kunststoff hergestellt.

Diese Abdeckungen 3 erstrecken sich über die Längen der Rahmenschenkel mit Ausnahme der Eckbereiche. Um die Eckbereiche von den Luftkammern in den Rahmenschenkeln abzugrenzen, sind Trennwände 2 in das Metallprofil 1 eingesetzt. Der so abgegrenzte Eckbereich ist mit einer Vergußmasse, vorzugsweise aus einem Zwei-Komponenten-Harz bestehend, ausgegossen. Die Eckbereiche sind dadurch verstärkt und verfestigt, während die übrigen Teile des Rahmens hohl sind. Lediglich an der Stoßstelle 14 der beiden Metallprofilenden ist ebenfalls ein Bereich durch Trennwände 2 abgeteilt und mit Vergußmasse ausgegossen, so daß auch dieser Bereich verstärk und verfestigt ist.

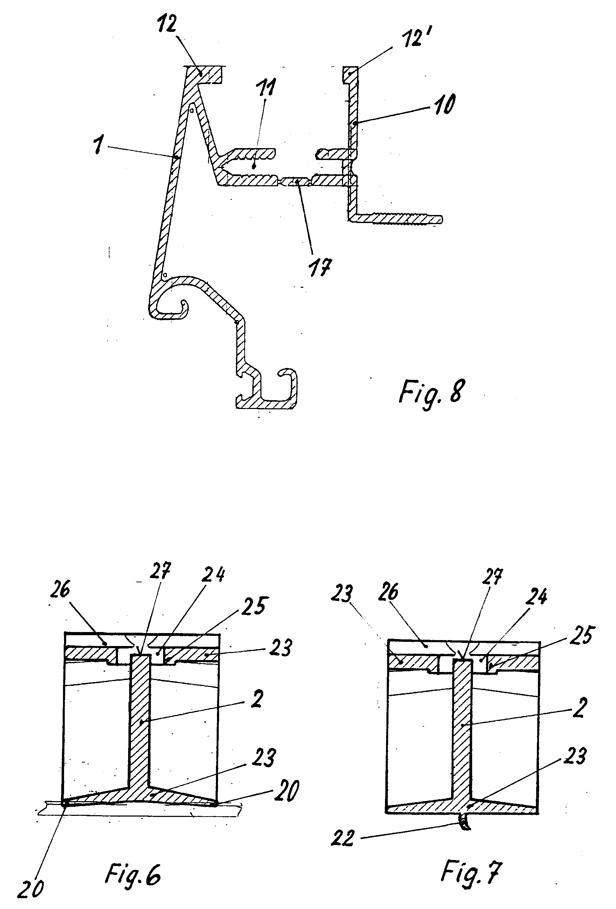

Das Ausgießen der Eckbereiche erfolgt von der Rückseite des Rahmens durch die von den Abdeckungen 3 freigelassenen öffnungen. Im Bereich der Stoßstelle 14 ist in der Abdeckung 3 eine Einfüllöffnung 5 vorgesehen. Eckbereiche wie auch die Stoßstelle 14 sind dadurch auch abgedichtet. Damit beim Einfüllen keine Vergußmasse überlaufen kann, andererseits ohne Rücksicht auf Toleranzen eine vollständige Füllung und damit Abdichtung des durch die Trennwände 2 abgegrenzten Raumes erfolgt, ist in den auszugießenden Bereichen jeweils eine Überfüllsicherung vorgesehen. Diese besteht beim Ausführungsbeispiel aus einer in die Trennwand 2 eingebauten Überlaufkante 27, wie in Figuren 6 und 7 gezeigt. Die auf der einen Seite der Trennwand 2 anfließende Vergußmasse steigt an dieser hoch, bis sie über die Überlaufkante 27 abfließt. Beim Vergießen kann somit stets eine bestimmte, vorprogrammierte Menge angewendet werden. Der mehr oder minder große Überschuß wird über diese Überlaufkante 27 abgeleitet. Die Trennwand 2 weist zusätzlich eine Überlauföffnung 24 auf, welcher eine Abschirmung 25 zugeordnet ist. Wie aus Fig. 6 und 7 ersichtlich, kann der Spiegel der Vergußmasse nur bis zur Überlaufkante 27 ansteigen. Dabei verschließt die Vergußmasse wie bei einem Siphon den Weg sowohl zu als auch von der öffnung 24, sodaß kein Luftaustausch mit dem Hohlraum des Profiles 1 stattfinden kann.

Die Trennwände 2 können dünnwandig sein. Um sie einwandfrei im Inneren des kanalartigen Profils 1 positionieren zu können, ist ein Versteifungsrand 23 vorgesehen, der die Trennwand 2 umgibt. Ferner ist auf dem Versteifungsrand 23 eine Dichtlippe 22 angeordnet, die sich gegen die Profilwand legt und Toleranzen ausgleicht, sodaß keine Vergußmasse in den Luftkammer-Raum des Rahmens eindringen kann. Diese Dichtlippe 22 kann sowohl eingesetzt oder der Einfachheit halber gleich an den Versteifungsrand 23 angeformt sein.

Bei Fig. 6 ist eine andere Ausbildung der Abdichtung vorgesehen. Anstelle der Dichtlippe 22 sind hier die Seiten des Versteifungsrandes 23 als Dichtung ausgebildet. Die beiden Profil-Schenkel des Versteifungsrandes 23 stehen in einem flachen Winkel zueinander und sind elastisch. Die Enden 20 sind als Dichtkanten ausgebildet und werden elastisch gegen das Profil 1 gedrückt. Unebenheiten und Toleranzen werden so auf einfache Weise ausgeglichen.

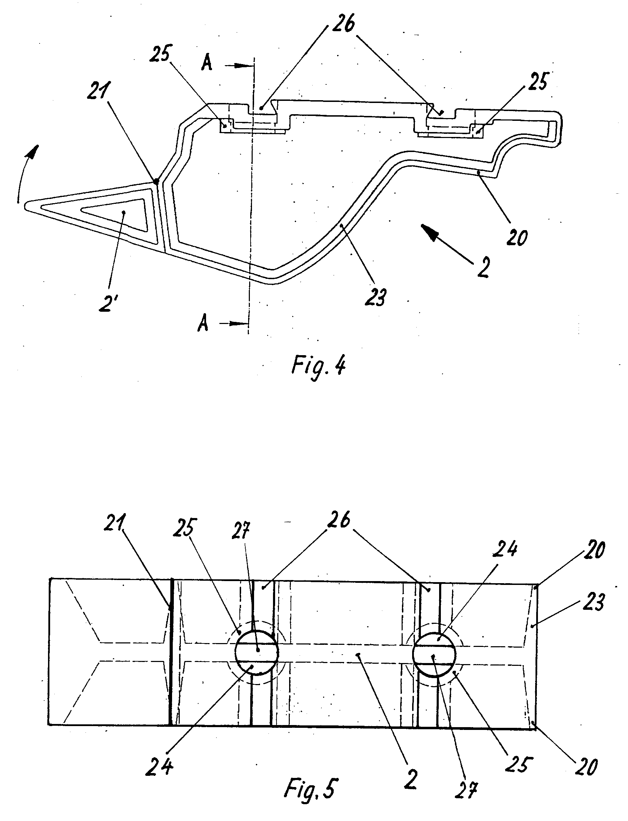

Um auch in kompliziertere Profile diese Trennwände 2 einsetzen zu können, ist die Trennwand 2 unterteilt. Das Teil 2' stützt sich mit seinem Versteifungsrand gegen die Trennwand 2 ab. Um bei der Montage dieses Teil 2' einfacher positionieren zu können, ist dieser bei der Ausführung gemäß Fig. 4 und 5 mit einem Scharnier 21 mit der Trennwand 2 verbunden. Dadurch kann der Teil 2' der Trennwand 2 beim Einführen in Richtung des Pfeiles (Fig.4) hochgeklappt und erst nach der Positionierung der Trennwand 2 diese in Anlage an den Teil 2' gebracht werden.

Bei dieser Vergußtechnik werden lediglich die Trennwände 2 durch die Vergußmasse fixiert. Die Kunststoff-Abdeckungen 3 sind in Längsrichtung frei beweglich. Zur Befestigung sind deshalb am Profil 1 Führungen 15 und 16 vorgesehen, in welche die Abdeckung 3 eingeklipst wird und die sich über die gesamte Länge des Metallprofils 1 erstrecken. Die Auflage auf den Führungen 15 und 16 ist dichtend und erlaubt eine Verschiebung in Längsrichtung, falls dies durch die unterschiedliche Wärmeausdehnung von Kunststoff und Metall erforderlich wird. Damit aber im Eckbereich beim Zusammenziehen der Kunststoff-Abdeckung 3 kein Spalt entsteht, ist die Abdeckung 3 an ihrem einen Ende 33 an der dort angeordneten Trennwand 2 befestigt, während am anderen Ende ein Überstand 31 und eine Längsbeweglichkeit gegenüber den anderen Trennwänden 2 vorgesehen ist. Um dies zu ermöglichen, sind beispielsweise in den Trennwänden 2 Nuten 26 angebracht, in die schalbenschwanzförmige Befestigungsrippen 32 der Abdeckung 3 eingreifen. Diese Rippen 32 erstrecken sich über die gesamte Länge der Abdeckung 3.

Bei der Ausführung gemäß Fig.8 besteht der Rahmen aus einem Außenteil, gebildet aus dem Metallprofil 1, und einem Innenteil, gebildet aus dem Metallprofil 10. Damit beide Rahmenteile gleich gefertigt sind und möglichst keine Toleranzen auftreten, werden diese beiden Rahmenteile aus einem Verbundprofil gemeinsam hergestellt, d. h. die beiden Metallprofile 1 und 10 sind durch ein Verbindungsstück 17 vereinigt. Sie werden gemeinsam auf Länge und in den Eckbereichen auf Gehrung geschnitten und dann auch gemeinsam über den jeweiligen Materialrand 12 bezw. 12' gebogen. Erst dann erfolgt eine Trennung der beiden Profile 1 und 10 durch Heraustrennen des Verbindungsstückes 17 für die weitere Bearbeitung wie oben beschrieben.

Bei den beschriebenen Ausführungsbeispielen der Erfindung wird der Rahmen in der Weise hergestellt, daß das kanalartige Profil entsprechend der Länge des gesamten Umfanges des Rahmens zugeschnitten und in den Eckbereichen auf der Profil-Innenseite keilförmig bis auf eine umlaufende Wandung ausgeschnitten und sodann das Profil über diese Wandung zu dem gewünschten Rahmen gebogen wird. Sehr kleine Rahmen lassen sich auf diese Weise schwierig herstellen, so daß es zweckmäßig ist, die einzelnen Rahmenschenkel auf Gehrung zu schneiden und zusammenzulegen. Aber auch bei dieser Herstellungsweise werden die Eckbereiche eingegrenzt und die so eingegrenzten Bereiche mit einer Vergußmasse ausgegossen. Auf diese Weise sind die Eckbereiche verstärkt und die einzelnen Rahmenschenkel stabil miteinander verbunden, auch wenn kein umlaufender Materialrand vorhanden ist.

## Patentansprüche

1. Geschlossener, aus einem kanalförmigen Profil bestehender Rahmen für Türen, Fenster und dergleichen insbesondere für Fahrzeuge, der in dem Bereich der Rahmenecken auf der Rahmeninnenseite keilförmige Ausschnitte und auf der Rahmenaußenseite eine umlaufende Wandung aufweist, über die das Profil gebogen ist, **dadurch gekennzeichnet**, daß die offene Seite des Profils (1) durch eine Abdeckung (3) verschlossen ist, und daß im Bereich der Rahmenecken der durch das Profil (1) und die Abdeckung (3) gebildete Hohlraum mit einer Vergußmasse ausgegossen ist.

2. Rahmen nach Anspruch 1, **dadurch gekennzeichnet**, daß der Hohlraum im Bereich der Stoßstelle (14) der beiden Profilenden ausgegossen ist.

3. Rahmen nach Anspruch 1 oder 2, **dadurch gekennzeichnet**, daß Trennwände (2) vorgesehen sind, die die ausgegossenen Bereiche des Hohlraumes begrenzen.

4. Rahmen nach Anspruch 3, **dadurch gekennzeichnet**, daß die Trennwände (2) an der Abdeckung (3) angeordnet sind.

5. Rahmen nach Anspruch 3 oder 4, **dadurch gekennzeichnet**, daß die Trennwände (2) unterteilt sind.

6. Rahmen nach Anspruch 5, **dadurch gekennzeichnet**, daß die Trennwände (2) durch ein Scharnier (21) unterteilt sind

7. Rahmen nach einem der Ansprüche 3 bis 6, **dadurch gekennzeichnet**, daß die Trennwände (2) einen Versteifungsrand (23) aufweisen.

8. Rahmen nach einem der Ansprüche 3 bis 7, **dadurch gekennzeichnet**, daß die Trennwände (2) an ihrem äußeren Umfang eine Dichtung aufweisen.

9. Rahmen nach Anspruch 8, **dadurch gekennzeichnet**, daß am Versteifungsrand (23) der Trennwand (2) eine Dichtlippe (22) auf der dem Metallprofil (1) zugewandten Seite angeordnet ist

10. Rahmen nach Anspruch 8, **dadurch gekennzeichnet**, daß wenigstens eine Seite des Versteifungsrandes (23) der Trennwand (2) als Dichtkante (20) ausgebildet ist.

11. Rahmen nach einem der Ansprüche 1 bis 10, **dadurch gekennzeichnet**, daß die Abdeckung (3) öffnungen (5) aufweist zum Einfüllen der Vergußmasse.

12. Rahmen nach einem der Ansprüche 1 bis 11, **dadurch gekennzeichnet**, daß die Abdeckung (3) die Eckbereiche des Rahmens nur teilweise abdeckt.

13. Rahmen nach einem oder mehreren der Ansprüche 1 bis 12, **dadurch gekennzeichnet**, daß die Abdeckung (3) am Profil (1) durch Führungen (15;16) längsbeweglich befestigt ist.

14. Rahmen nach Anspruch 13, **dadurch gekennzeichnet**, daß die Abdeckung (3) Befestigungsrippen (32) aufweist, welche in Nuten (26) der Trennwände (2) eingreifen.

15. Rahmen nach einem der Ansprüche 1 bis 11, **dadurch gekennzeichnet**, daß die Trennwände (2) durch die Vergußmasse mit dem Profil (1) fest verbunden sind.

16. Rahmen nach einem der Ansprüche 1 bis 15, **dadurch gekennzeichnet**, daß die Abdeckung (3) an ihrem einen Ende an einer Trennwand (2) befestigt ist und an ihrem freien Ende einen Überstand (31) in den Eckbereich aufweist.

17. Rahmen nach Anspruch 16, **dadurch gekennzeichnet**, daß das eine Ende (33) der Abdeckung (3) sich am Überstand (31) der anschließenden Abdeckung (3) abstützt.

18. Rahmen nach einem der Ansprüche 1 bis 17, **dadurch gekennzeichnet**, daß in den mit Vergußmasse auszugießenden Bereichen jeweils eine Überfüllsicherung vorgesehen ist.

19. Rahmen nach Anspruch 18, **dadurch gekennzeichnet**, daß die Trennwand (2) einen Überlauf (24) aufweist.

20. Rahmen nach Anspruch 19, **dadurch gekennzeichnet**, daß der Überlauf (24) abgeschirmt ist.

21. Rahmen nach einem der Ansprüche 1 bis 20, **dadurch gekennzeichnet**, daß die Vergußmasse aus einem Zwei-Komponenten-Harz besteht.

22. Rahmen nach einem der Ansprüche 1 bis 21, **dadurch gekennzeichnet**, daß die Stoßstelle (14) in der Mitte eines Rahmenschenkels angeordnet ist.

23. Verfahren zur Herstellung eines Rahmens aus einem kanalförmigen Profil nach einem der Ansprüche 1 bis 22, **dadurch gekennzeichnet**, daß die Eckbereiche und/oder die Stoßstelle innerhalb des kanalförmigen Profiles eingegrenzt und die eingegrenzten Bereiche mit einer Vergußmasse ausgegossen werden.

24. Verfahren nach Anspruch 23, bei welchem ein kanalförmiges Profil entsprechend der Länge des Umfanges des Rahmens zugeschnitten und in den Eckbereichen auf der Profil-Innenseite keilförmig bis auf eine auf der Rahmenaußenseite umlaufende Wandung ausgeschnitten wird, sodann das Profil über die umlaufende Wandung zu dem gewünschten Rahmen gebogen wird, **dadurch gekennzeichnet**, daß bei einem aus Außen- und Innenteil bestehenden Rahmen das Außenprofil (1) und das Innenprofil (10) durch ein Verbindungsstück (17) vor der Bearbeitung miteinander verbunden, gemeinsam geschnitten und gebogen werden, worauf durch Beseitigung des Verbindungsstückes (17) die beiden Rahmenteile (1; 10) für die weitere Fertigung getrennt werden.
